# FASCICULE DE BREVET EUROPEEN

(11) **EP 2 605 423 B1**
(45) Date de publication et mention de la délivrance du brevet: **27.07.2016**
(21) Numéro de dépôt: 12197099.0
(22) Date de dépôt: 13.12.2012
(51) Int. Cl.: H04B 7/185

(54) **Système de transmission satellitaire avec commutation entre des signaux de données à bas, moyen et haut débit en fonction de conditions d'interférence.**
Satelliten Übertragungsanordnung mit Schaltung zwischen niedrig, mittel und hoher Datengeschwindigkeit entsprechend Interferenz Bedingungen.
Satellite transmission system with commutation between low, medium and high data rate signals according to interference conditions.

(30) Priorité: 16.12.2011 FR 1103885
(43) Date de publication de la demande: 19.06.2013
(73) Titulaire: Thales, 92200 Neuilly Sur Seine (FR)
(72) Inventeur: Touret, Marc, 92704 Colombes Cedex (FR)
(74) Mandataire: Brunelli, Gérald

(56) Documents cités:
- WO-A1-2004/029794
- US-A- 4 837 786
- US-A1- 2003 054 816
- US-A1- 2004 127 158

## Description

La présente invention concerne un système de transmission satellitaire comportant au moins deux stations et un satellite. Chaque station comportant au moins un émetteur et un récepteur de signaux satellitaires. Ce système est conçu pour fonctionner dans un environnement comportant des sources d'interférence et dans lequel l'utilisation des bandes de fréquences est couteuse. Ces stations peuvent être par exemple des stations au sol, transportées dans un véhicule terrestre, un navire ou un aéronef.

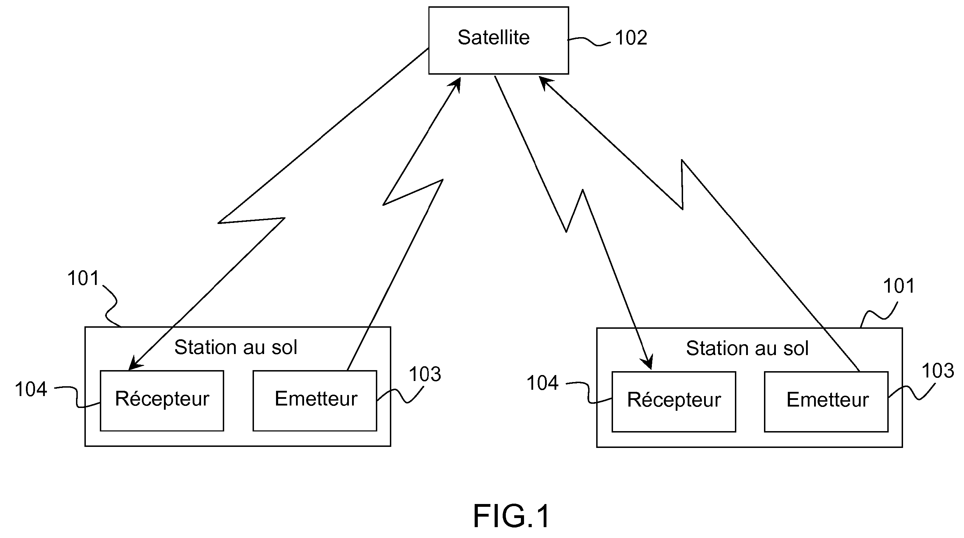

Il est également connu, pour réaliser la transmission de signaux satellitaires en présence de sources d'interférence, des systèmes tel que présentés figure 1, utilisant deux signaux de types différents. Un premier signal à haut débit non protégé contre les interférences, et un deuxième signal à bas débit mais protégé contre les interférences. Cette protection contre les interférences peut-être réalisée, par exemple, en implémentant un système changeant régulièrement la fréquence du signal porteur. Il est connu d'implémenter ces deux signaux dans deux bandes disjointes et dans le cas où le premier signal haut débit est interféré, de désactiver celui ci et d'utiliser l'ensemble de la bande pour l'émission du deuxième signal bas débit. Cette solution présente l'inconvénient de ne pas être optimale. En effet la partie de la bande de fréquences utilisée pour l'émission du deuxième signal bas débit, ne permet pas, dans le cas d'absence d'interférence, de transmettre un débit équivalent à celui qui serait disponible si cette partie de la bande était utilisée pour l'émission du premier signal haut débit. Cette solution présente de plus l'inconvénient de provoquer une rupture dans la continuité de service lors du passage d'une configuration à une autre. Cette rupture de la transmission peut atteindre plusieurs minutes.

Il est également connu des systèmes tels que présentés dans le brevet américain US 4,837,786 du 6 Juin 1989, où un même signal transporte simultanément un canal haut débit et un canal bas débit plus robuste. En fonction de la présence ou non d'interférences, la transmission du signal satellitaire se fera soit par le canal haut débit soit par le canal bas débit.

Il est également connu des systèmes tels que présentés dans la demande de brevet américaine US 2011/0249706. Ces systèmes sont constitués de stations 101 et d'un satellite 102. Ce satellite permet de relayer les signaux émis d'une station vers l'autre station. Chaque station comprend un émetteur 103 et un récepteur 104. Les émetteurs et récepteurs compris dans les stations permettent d'émettre et de recevoir un premier signal haut débit et un deuxième signal bas débit protégé contre les interférences simultanément et en utilisant la même bande de fréquence. Dans ces systèmes le premier signal haut débit peut par exemple suivre les recommandations de la norme DVB-S2 (ETSI 302 307). Cette norme permettant entre autre la transmission d'un signal de 20 Mbps dans une bande passante de 20 MHz. Pour le deuxième signal bas débit il est possible d'utiliser, par exemple, un signal d'un débit de transmission de 20 kbit/s utilisant une largeur de bande de 2 MHz, ce signal pouvant avoir de plus un dispositif permettant à la fréquence porteuse d'évoluer dans l'intégralité de la bande de 20 Mhz utilisée par le premier signal haut débit. Le rapport entre l'étalement du premier signal haut débit et du deuxième signal bas débit est dans ce cas de 1000. Soit un différentiel de puissance de 30dB entre le premier et le deuxième signal. Le deuxième signal haut débit n'est donc pas perturbé par le premier signal bas débit et ainsi le deuxième signal bas débit peut cohabiter simultanément dans la même bande de fréquence avec le premier signal haut débit sans provoquer de dégradations. Cependant comme la configuration des deux signaux est fixe, la présence d'un interféreur rend le premier signal haut débit inefficace, sans que les ressources qui lui sont allouées (en particulier la puissance utilisée par le premier signal haut débit) ne puissent être réallouées vers le deuxième signal bas débit. Le manque d'adaptabilité aux conditions de l'environnement de ce type de système ne permet donc pas d'atteindre des performances optimales.

La présente invention vise donc à remédier à ces problèmes en proposant un système de transmission satellitaire améliorant l'utilisation de la bande de fréquence et ne provoquant pas de ruptures dans la continuité de service lors d'un changement dans les conditions extérieures d'utilisation dudit système.

Ainsi il est proposé suivant un aspect de l'invention un système de transmission satellitaire de données comprenant au moins un satellite et au moins deux stations. Les stations comprennent des moyens d'émission adaptés pour émettre simultanément et dans la même bande de fréquence un premier signal de haut débit et un deuxième signal de bas débit ayant une largeur de bande inférieure ou égale à celle dudit premier signal, et des moyens de réception adaptés pour recevoir simultanément et dans la même bande de fréquence ledit premier et ledit deuxième signal. Le système comprend également des moyens de détection de la présence d'une interférence sur ladite bande de fréquence. De plus, le deuxième signal est adapté pour permettre le changement de la fréquence du signal de porteuse durant la transmission, ladite fréquence du signal de porteuse du deuxième signal évoluant dans l'intégralité de la largeur de bande fréquentielle utilisée par ledit premier signal. De plus, les moyens d'émission et de réception sont respectivement adaptés pour, en présence d'interférence, commuter l'émission et la réception dudit deuxième signal d'un bas débit vers un moyen débit, pour désactiver la transmission dudit premier signal, pour transférer la puissance d'émission préalablement allouée audit premier signal vers ledit deuxième signal, et pour transmettre des données en utilisant ledit deuxième signal. Les moyens d'émission et de réception sont également respectivement adaptés pour, en l'absence d'interférence, commuter l'émission et la réception dudit deuxième signal d'un moyen débit vers un bas débit et pour activer la transmission dudit premier signal, et transmettre des données en utilisant ledit premier signal.

Un bas débit est considéré comme un débit inférieur à 20kbps, un moyen débit est considéré comme un débit compris entre 20kbps et 8Mbps et un haut débit est considéré comme un débit supérieur à 8Mbps.

Ce système apporte donc le double avantage de permettre au premier signal haut débit d'utiliser l'intégralité de la bande de fréquences disponible tout en conservant en permanence un deuxième signal bas débit permettant de continuer la transmission de données, même en présence d'interférences. Les deux signaux étant activés en permanence il n'y a pas de risque de ruptures dans la continuité de service lorsque des perturbations apparaissent. De plus le système permet en cas d'une interférence de désactiver le premier signal haut débit devenu inutile et de retourner dans l'état initial lorsque le système détecte la fin de l'interférence. L'efficacité du système repose sur sa capacité à détecter une interférence, rendant erroné le flux de données transmises, à détecter l'arrêt de l'interférence, à changer de forme d'onde et à rediriger le flux de données vers la forme d'onde offrant la plus grande capacité de transmission, ceci de façon synchrone entre l'émetteur et le récepteur.

Ce système permet l'émission et la réception du premier signal haut débit avec une puissance telle que la puissance de sa porteuse est au dessus ou proche du niveau de bruit thermique ambiant. Le premier signal haut débit est émis sans mettre en oeuvre de techniques d'étalement de spectre de type étalement par séquence directe (connu aussi sous l'acronyme DSSS pour Direct Sequence Spread Spectrum dans l'état de l'art) tandis que le deuxième signal bas débit met en oeuvre une technique d'étalement de spectre. Le but étant d'avoir le deuxième signal bas débit dont la puissance d'émission est très en dessous du niveau de bruit (<-10dB) tandis que le premier signal haut débit est émis à une puissance supérieure ou proche du niveau de bruit (Es/N0 > 0dB)

En réception le deuxième signal bas débit est assimilé par le récepteur comme un bruit par rapport au premier signal haut débit. De plus les techniques de désétalement connues de l'homme du métier permettent au récepteur de recevoir et déterminer les informations contenues dans le deuxième signal bas débit.

Suivant une caractéristique de l'invention, ledit deuxième signal de bas débit met en oeuvre des techniques d'étalement de spectre par séquence directe (en anglais DSSS pour Direct Sequence Spread Spectrum).

Suivant une caractéristique de l'invention, les moyens d'émission et de réception sont adaptés pour maintenir la transmission entre l'émetteur et le récepteur durant la commutation dudit premier signal et dudit deuxième signal.

Ainsi le flux de données (à hauteur des capacités du signal moyen débit) est transmis sans interruption de service (par exemple un échange de donnés utilisant un protocole de voix sur protocole internet ne sera pas interrompu durant la commutation).

Suivant une caractéristique de l'invention le système, comprend au moins deux stations, qui ne sont pas contenues dans le même spot satellitaire.

Ainsi la mise en oeuvre de l'invention est indépendante de la position géographique des stations et de la configuration du satellite.

L'invention consiste également en un procédé de transmission satellitaire de données comprenant au moins un satellite et deux stations, lesdites stations comprenant des moyens d'émission adaptés pour émettre simultanément et dans la même bande de fréquence un premier signal de haut débit et un deuxième signal de bas débit ayant une largeur de bande inférieure ou égale à celle dudit premier signal, et des moyens de réception adaptés pour recevoir simultanément et dans la même bande de fréquence ledit premier et ledit deuxième signal. Le procédé est caractérisé en ce que ledit deuxième signal est adapté pour permettre le changement de la fréquence du signal de porteuse durant la transmission, ladite fréquence du signal de porteuse du deuxième signal évoluant dans l'intégralité de la largeur de bande fréquentielle utilisé par ledit premier signal. Le procédé est également caractérisé en ce qu'il comprend :
- une étape de détection d'une interférence
- une étape de reconfiguration de moyens d'émission et de moyens de réception en présence d'interférence, afin de commuter l'émission et la réception d'un deuxième signal bas débit vers un moyen débit, désactiver la transmission d'un premier signal haut débit, transférer la puissance d'émission préalablement allouée audit premier signal vers ledit deuxième signal, et transmettre les données en utilisant ledit deuxième signal,
- une étape de reconfiguration desdits moyens d'émission et desdits moyens réception en l'absence d'interférence afin de commuter l'émission et la réception dudit deuxième signal d'un moyen débit vers un bas débit, d'activer la transmission dudit premier signal haut débit, et de transmettre des données en utilisant ledit premier signal.

Ainsi ce procédé offre les avantages suivants :
- La transmission d'un flux de données (à hauteur des capacités de transmission du signal de moyen débit) ne dépend pas des conditions de propagation et en particulier de la présence ou non d'un signal interférent.
- La planification des ressources satellitaires est simplifiée puisqu'il n'est pas nécessaire de réserver une ressource fréquentielle pour la forme d'onde protégée et une autre ressource fréquentielle pour la forme d'onde non protégée. Une seule ressource fréquentielle doit être planifiée.

L'invention sera mieux comprise et d'autres avantages apparaîtront à la lecture de la description détaillée faite à titre d'exemple non limitatif et à l'aide des figures parmi lesquelles :
- La figure 1 présente un système suivant l'état de la technique le plus proche.
- La figure 2 présente un premier mode de réalisation du système suivant un aspect de l'invention.

Le système tel que présenté figure 1 représente l'état de la technique le plus proche et est constitué de stations 101 et d'un satellite 102. Ce satellite permet de répéter les signaux émis d'une station vers l'autre station. Chaque station comprend un émetteur 103 et un récepteur 104. Les émetteurs et récepteurs compris dans les stations permettent d'émettre et de recevoir simultanément un premier signal haut débit et un deuxième signal bas débit en utilisant la même bande de fréquences.

Le premier signal haut débit peut par exemple suivre les recommandations de la norme DVB-S2 (ETSI 302 307). Cette norme permettant la transmission d'un signal de 20 Mbps dans une bande passante de 20 MHz. Pour le deuxième signal bas débit il est possible d'utiliser, par exemple, un signal d'un débit de transmission de 20 kbit/s utilisant une largeur de bande de 2 MHz, ce signal permettant à la fréquence porteuse d'évoluer dans l'intégralité de la bande de 20 Mhz utilisée par le premier signal haut débit. Les mécanismes de saut de fréquences peuvent être utilisés en relation avec de l'étalement de spectre (FHSS en anglais), avec un accès multiple par répartition de code (FH-CDMA en anglais) ou utilisant un accès multiple géré par sauts de fréquence de porteuse différents pour chaque utilisateur (OFHMA en anglais). Le rapport entre l'étalement du premier signal haut débit et du deuxième signal bas débit est dans ce cas de 1000. En prenant en compte l'étalement, la différence de puissance est donc de 30dB entre le premier et le deuxième signal. Le deuxième signal haut débit n'est donc pas perturbé par le premier signal bas débit et donc le deuxième signal bas débit peut cohabiter simultanément dans la même bande de fréquence avec le premier signal haut débit sans provoquer de dégradations sur les performances du premier signal haut débit. Cependant comme la configuration des deux signaux est fixe, la présence d'un interféreur rend le premier signal haut débit inefficace, sans que ses ressources (en particulier la puissance utilisée par le premier signal haut débit) ne puissent être réallouées vers le deuxième signal bas débit. Le manque d'adaptabilité aux conditions d'environnement de ce type de système ne lui permet pas d'atteindre des performances suffisantes.

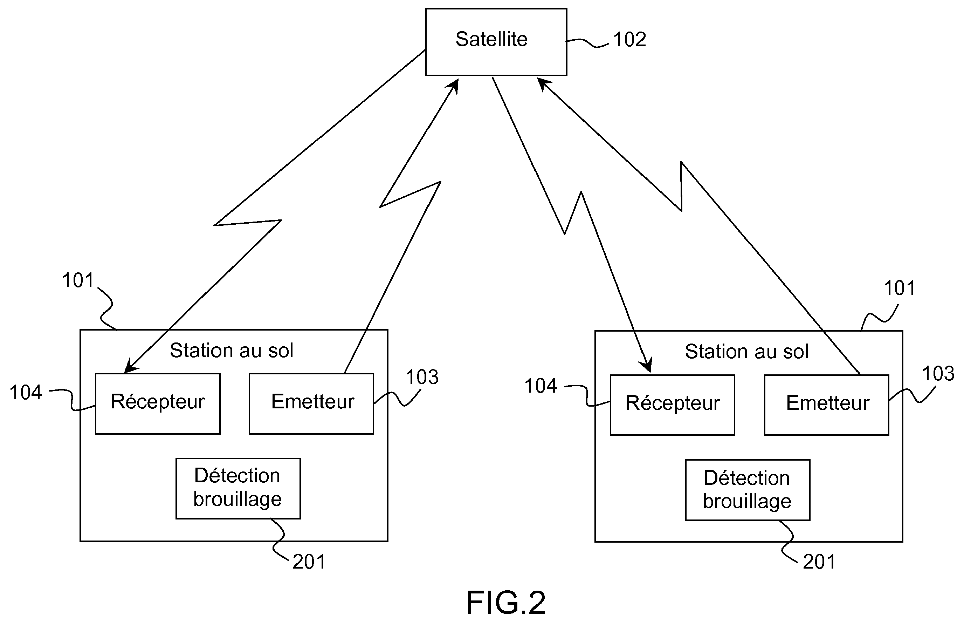

Le système tel que présenté figure 2 est constitué des éléments de l'état de la technique le plus proche tel que représenté figure 1. De plus le système comporte un dispositif 201 de détection d'interférences. Cette détection des interférences peut-être réalisée par calcul du rapport signal sur bruit, ou par analyse spectrale avec reconstruction du signal reçu.

Lorsqu'une interférence est détectée, l'émission et la réception du premier signal haut débit est désactivée, et l'émission et la réception du deuxième signal bas débit change de paramétrage. Ce changement de paramétrage permet d'augmenter la puissance allouée au deuxième signal bas débit et d'augmenter son débit, afin d'obtenir un signal moyen débit. Le dispositif de changement de paramétrage du système fait donc basculer le système entre les deux états suivants :
- Etat sans interférence, le système envoie le premier signal haut débit et le deuxième signal bas débit dans la même bande de fréquence. Le premier signal haut débit transmet l'essentiel du trafic tandis que le deuxième signal bas débit est très étalé afin de ne transmettre que les informations nécessaires au maintien du deuxième signal bas débit sans perturber le premier signal haut débit.
- En état avec interférence, le système désactive l'émission du premier signal haut débit, et transmet le trafic en utilisant le deuxième signal bas débit. Ce deuxième signal est reconfiguré afin d'augmenter son efficacité spectrale et d'utiliser la puissance précédemment allouée au premier signal. Le changement d'efficacité spectrale est réalisé en changeant les paramètres de codage, facteur d'étalement et modulation. Le deuxième signal aura alors un moyen débit. Ceci permet d'avoir un deuxième signal résistant aux interférences tout en offrant un débit plus important.

Ce changement entre les deux états sans interférence et avec interférence est réalisé automatiquement, sans rupture dans les communications transmises entre les différentes stations. Le flux de trafic est dirigé vers le signal adéquat : premier signal haut débit dans l'état sans interférence et, deuxième signal bas débit dans l'état avec interférence. Les données émises par les deux signaux sont généralement des flux IP. Un routeur IP peut donc être connecté à chacun des flux. En fonction de l'état du système (sans interférence ou avec interférence) les données sont dirigées par le routeur vers le signal adéquat. Des protocoles de routage type OSPF permettent alors de diriger correctement le flux de trafic de bout en bout.

## Revendications

1. Système de transmission satellitaire de données comprenant au moins un satellite (102) et au moins deux stations (101), lesdites stations (101) comprenant des moyens d'émission (103) adaptés pour émettre simultanément et dans la même bande de fréquence un premier signal de haut débit et un deuxième signal de bas débit ayant une largeur de bande inférieure ou égale à celle dudit premier signal, et des moyens de réception (104) adaptés pour recevoir simultanément et dans la même bande de fréquence ledit premier et ledit deuxième signal, **caractérisé en ce qu'**il comprend également
- des moyens de détection (201) de la présence d'une interférence sur ladite bande de fréquence
et **en ce que**:
- ledit deuxième signal est adapté pour permettre le changement de la fréquence du signal de porteuse durant la transmission, ladite fréquence du signal de porteuse du deuxième signal évoluant dans l'intégralité de la largeur de bande fréquentielle utilisée par ledit premier signal,
- lesdits moyens d'émission (103) et de réception (104) sont respectivement adaptés pour, en présence d'interférence :
• commuter l'émission et la réception dudit deuxième signal d'un bas débit vers un moyen débit,
• désactiver la transmission dudit premier signal,
• transférer la puissance d'émission préalablement allouée audit premier signal vers ledit deuxième signal, et
• transmettre des données en utilisant ledit deuxième signal
- lesdits moyens d'émission (103) et de réception (104) sont respectivement adaptés pour, en l'absence d'interférence :
• commuter l'émission et la réception dudit deuxième signal d'un moyen débit vers un bas débit,
• activer la transmission dudit premier signal,
• transmettre des données en utilisant ledit premier signal.

2. Système selon la revendication 1, dans lequel ledit deuxième signal de bas débit met en oeuvre des techniques d'étalement de spectre par séquence directe (en anglais DSSS pour Direct Sequence Spread Spectrum)

3. Système selon l'une des revendications 1 à 2, dans lequel les moyens d'émission (103) et de réception (104) sont adaptés pour maintenir la transmission entre l'émetteur et le récepteur durant la commutation dudit premier et dudit deuxième signal.

4. Système selon l'une des revendications 1 à 3, comprenant au moins deux stations, dans lequel aux moins deux desdites stations ne sont pas contenues dans le même spot satellitaire.

5. Procédé de transmission satellitaire de données comprenant au moins un satellite (102) et au moins deux stations (101), lesdites stations (101) comprenant des moyens d'émission (103) adaptés pour émettre simultanément et dans la même bande de fréquence un premier signal de haut débit et un deuxième signal de bas débit ayant une largeur de bande inférieure ou égale à celle dudit premier signal, et des moyens de réception (104) adaptés pour recevoir simultanément et dans la même bande de fréquence ledit premier et ledit deuxième signal, **caractérisé en ce que** ledit deuxième signal est adapté pour permettre le changement de la fréquence du signal de porteuse durant la transmission, ladite fréquence du signal de porteuse du deuxième signal évoluant dans l'intégralité de la largeur de bande fréquentielle utilisée par ledit premier signal, et **en ce qu'**il comprend :
- une étape de détection d'une interférence (201)
- une étape de reconfiguration de moyens d'émission (103) et de moyens de réception (104) en présence d'interférence, de :
• commuter l'émission et la réception d'un deuxième signal bas débit vers un moyen débit,
• désactiver la transmission d'un premier signal haut débit,
• transférer la puissance d'émission préalablement allouée audit premier signal vers ledit deuxième signal, et
• transmettre des données en utilisant ledit deuxième signal
- une étape de reconfiguration desdits moyens d'émission (103) et desdits moyens réception (104) en l'absence d'interférence, afin de :
• commuter l'émission et la réception dudit deuxième signal d'un moyen débit vers un bas débit,
• activer la transmission dudit premier signal haut débit,
• transmettre des données en utilisant ledit premier signal.

## Patentansprüche

1. Satelliten Übertragungsanordnung für Daten umfassend zumindest einen Satelliten (102) und zumindest zwei Stationen (101), wobei die Stationen (101) geeignete Sendemittel (103), um gleichzeitig und auf derselben Frequenz ein erstes Signal hoher Datengeschwindigkeit und ein zweites Signal niedriger Datengeschwindigkeit mit niedrigerer oder gleicher Bandbreite wie das erste Signal auszusenden, und geeignete Empfangsmittel (104), um gleichzeitig und auf derselben Frequenz das erste und das zweite Signal zu empfangen, umfassen, **dadurch gekennzeichnet, dass** sie zudem
- Mittel zur Erkennung (201) des Vorhandenseins einer Interferenz auf der Frequenz umfasst
und **dadurch gekennzeichnet, dass**:
- das zweite Signal geeignet ist, die Frequenzänderung des Trägersignals während der Übertragung zuzulassen, wobei sich die Frequenz des Trägersignals des zweiten Signals auf der gesamten vom ersten Signal genutzten Frequenzbandbreite entwickelt,
- die Sende- (103) und Empfangsmittel (104) jeweils geeignet sind, bei Vorliegen einer Interferenz:
• die Sendung und den Empfang des zweiten Signals von einer niedrigen auf eine mittlere Datengeschwindigkeit zu schalten,
• die Übertragung des ersten Signals zu deaktivieren,
• die zuvor dem ersten Signal zugewiesene Sendeleistung auf das zweite Signal zu übertragen und
• Daten unter Verwendung des zweiten Signals zu übertragen,
- die Sende- (103) und Empfangsmittel (104) jeweils geeignet sind, bei Nicht-Vorliegen einer Interferenz:
• die Sendung und den Empfang des zweiten Signals von einer mittleren auf eine niedrige Datengeschwindigkeit zu schalten,
• die Übertragung des ersten Signals zu aktivieren,
• Daten unter Verwendung des ersten Signals zu übertragen.

2. System nach Anspruch 1, bei dem das zweite Signal niedriger Datengeschwindigkeit Spreizbandtechniken (DSSS, Direct Sequence Spread Spectrum) anwendet.

3. System nach einem der Ansprüche 1 bis 2, wobei die Sende- (103) und Empfangsmittel (104) geeignet sind, die Übertragung zwischen dem Sender und dem Empfänger während der Umschaltung des ersten und des zweiten Signals aufrecht zu erhalten.

4. System nach einem der Ansprüche 1 bis 3 umfassend zumindest zwei Stationen, bei dem zumindest zwei der Stationen nicht im selben Satellitenspot enthalten sind.

5. Satelliten Übertragungsverfahren für Daten umfassend zumindest einen Satelliten (102) und zumindest zwei Stationen (101), wobei die Stationen (101) geeignete Sendemittel (103), um gleichzeitig und auf derselben Frequenz ein erstes Signal hoher Datengeschwindigkeit und ein zweites Signal niedriger Datengeschwindigkeit mit niedrigerer oder gleicher Bandbreite wie das erste Signal auszusenden, und geeignete Empfangsmittel (104), um gleichzeitig und auf derselben Frequenz das erste und das zweite Signal zum empfangen, umfassen, **dadurch gekennzeichnet, dass** das zweite Signal geeignet ist, um die Frequenzänderung des Trägersignals während der Übertragung zuzulassen, wobei sich die Frequenz des Trägersignals des zweiten Signals auf der gesamten vom ersten Signal genutzten Frequenzbandbreite entwickelt, und **dadurch gekennzeichnet, dass** es Folgendes umfasst:
- einen Schritt zur Erkennung einer Interferenz (201)
- einen Schritt zur Konfigurationsänderung von Sende- (103) und Empfangsmitteln (104) beim Vorhandensein einer Interferenz, um:
• die Sendung und den Empfang eines zweiten Signals von einer niedrigen auf eine mittlere Datengeschwindigkeit zu schalten,
• die Übertragung eines ersten Signals mit hoher Datengeschwindigkeit zu deaktivieren,
• die zuvor dem ersten Signal zugewiesene Sendeleistung auf das zweite Signal zu übertragen und
• Daten unter Verwendung des zweiten Signals zu übertragen,
- einen Schritt zur Konfigurationsänderung der Sende- (103) und Empfangsmittel (104) beim Nicht-Vorhandensein einer Interferenz umfasst, um:
• die Entsendung und den Empfang des zweiten Signals von einer mittleren auf eine niedrige Datengeschwindigkeit zu schalten,
• die Übertragung des ersten Signals mit hoher Datengeschwindigkeit zu aktivieren,
• Daten unter Verwendung des ersten Signals zu übertragen.

## Claims

1. Satellite data transmission system comprising at least one satellite (102) and at least two stations (101), the stations (101) comprising emission means (103) which are capable of emitting simultaneously and in the same frequency band a first broadband signal and a second narrowband signal which has a bandwidth which is less than or equal to that of the first signal, and reception means (104) which are capable of receiving simultaneously and in the same frequency band the first signal and second signal, **characterised in that** it also comprises
- means (201) for detecting the presence of an interference on the frequency band,
and **in that**:
- the second signal is capable of allowing the frequency of the carrier signal to be changed during the transmission, the frequency of the carrier signal of the second signal developing over the entirety of the frequency bandwidth used by the first signal,
- the emission means (103) and reception means (104) are capable, respectively, in the presence of interference, of:
• switching the transmission and the reception of the second signal from a narrowband to a medium band,
• deactivating the transmission of the first signal,
• transferring the emission power which has previously been allocated to the first signal to the second signal, and
• transmitting data using the second signal,
- the emission means (103) and reception means (104) are capable, respectively, in the absence of interference, of:
• switching the emission and the reception of the second signal from a medium band to a narrow band,
• activating the transmission of the first signal,
• transmitting data using the first signal.

2. System according to claim 1, wherein the second narrowband signal implements techniques of Direct Sequence Spread Spectrum (DSSS).

3. System according to either claim 1 to claim 2, wherein the emission means (103) and reception means (104) are capable of maintaining the transmission between the emitter and the receiver during the switching of the first and the second signal.

4. System according to any one of claims 1 to 3, comprising at least two stations, wherein at least two of the stations are not contained in the same satellite spot.

5. Method for satellite data transmission comprising at least one satellite (102) and at least two stations (101), the stations (101) comprising emission means (103) which are capable of emitting simultaneously and in the same frequency band a first broadband signal and a second narrowband signal which has a bandwidth which is less than or equal to that of the first signal, and reception means (104) which are capable of receiving simultaneously and in the same frequency band the first signal and second signal, **characterised in that** the second signal is capable of allowing the frequency of the carrier signal to be changed during the transmission, the frequency of the carrier signal of the second signal developing over the entirety of the frequency bandwidth used by the first signal, and **in that** it comprises:
- a step (201) of detection of an interference
- a step of reconfiguration of emission means (103) and reception means (104) in the presence of interference, for:
• switching the transmission and the reception of a second signal from a narrow band to a medium band,
• deactivating the transmission of a first broadband signal,
• transferring the emission power which has been previously allocated to the first signal to the second signal, and
• transmitting data using the second signal,
- a step of reconfiguration of the emission means (103) and reception means (104) in the absence of interference in order to:
• switch the emission and the reception of the second signal from a medium band to a narrow band,
• activate the transmission of the first broadband signal,
• transmit data using the first signal.
